# EUROPÄISCHE PATENTSCHRIFT

(11) **EP 3 816 656 B1**
(45) Veröffentlichungstag und Bekanntmachung des Hinweises auf die Patenterteilung: **11.06.2025**
(21) Anmeldenummer: 20204308.9
(22) Anmeldetag: 28.10.2020
(51) Int. Cl.: G01S 7/48, G01S 7/484, G01S 7/4865, G01S 7/487, G01S 17/42, G01S 17/894, G01S 17/931

(54) **VERFAHREN UND VORRICHTUNG ZUR OPTISCHEN DISTANZMESSUNG**
METHOD AND DEVICE FOR OPTICALLY MEASURING DISTANCES
PROCÉDÉ ET DISPOSITIF DE MESURE OPTIQUE DE DISTANCE

(30) Priorität: 28.10.2019 EP 19205601
(43) Veröffentlichungstag der Anmeldung: 05.05.2021
(73) Patentinhaber: MicroVision, Inc., Redmond, WA 98052 (US)
(72) Erfinder: Holzhüter, Hanno, 22143 Hamburg (DE); Lange, Frederik, 93053 Regensburg (DE); Fellenberg, Christian, 22143 Hamburg (DE)
(74) Vertreter: RGTH

(56) Entgegenhaltungen:
- WO-A1-2012/135874
- DE-A1- 102017 208 704

## Beschreibung

### Technisches Gebiet

Die Erfindung betrifft ein Verfahren sowie eine Vorrichtung zur optischen Distanzmessung.

### Stand der Technik

Optische Distanzmessungen, insbesondere zur Anwendung in der fahrerlosen Navigation von Fahrzeugen, sind aus dem Stand der Technik bekannt. Sie beruhen auf dem Time-of-Flight-(ToF)Prinzip, wobei zur Messung ein scannender Sensor, insbesondere ein LIDAR (Abkürzung für "light detection and ranging") Sensor eingesetzt wird, der periodisch Messpulse aussendet, die an Objekten reflektiert werden, wobei die reflektierten Messpulse detektiert werden. Aus der Bestimmung der Laufzeit der Messpulse von dem Sensor zu den Objekten und zurück kann mithilfe der Lichtgeschwindigkeit auf die Distanz zu diesen Objekten geschlossen werden.

Das Prinzip der ToF-Messungen ist dadurch limitiert, dass Messpulse mit einem bestimmten Abstand zueinander ausgesandt werden müssen, um sogenannte Aliasing-Effekte zu vermeiden.

Grundsätzlich wird bei ToF-Messungen die doppelte Laufzeit bis zum Ende eines Messbereiches abgewartet, bis ein zuvor ausgesandter Messpuls theoretischerweise nach Reflexion wieder empfangen worden ist. Wird diese Zeit nicht abgewartet, ist keine klare Zuordnung der empfangenen Messpulse möglich, da der Aussendezeitpunkt ungewiss ist. Dies begrenzt die Möglichkeit von ToF-Messungen, da die Laufzeit des Pulses, d. h. die Zeit, die der Messpuls braucht, bis er wieder einen Sensor erreicht, nicht beschleunigt werden kann. Um also einen großen Distanzbereich abzutasten, muss nach dem Initiieren eines Messpulses die doppelte Laufzeit bis zum am weitesten entferntesten möglichen Objekt gewartet werden, bis erneut ein Messpuls abgegeben werden kann.

Ferner ist für die maximale Detektionsreichweite die abgegebene Energie ein wesentlicher Parameter, um sicher zu gehen, dass Reflexionen von weit entfernten Objekten noch detektiert werden können.

Insgesamt ist die Erhöhung einer Detektionswahrscheinlichkeit im Stand der Technik grundsätzlich nur mit einem erhöhten Zeitbudget bzw. erhöhter Energie möglich. Dabei ist allerdings im Rahmen der Augensicherheit eine möglichst geringe Spitzenleistung der abgesandten Pulse wünschenswert. Auch ein geringes Zeitbudget ist erstrebenswert, da nur dann zeitnah Messergebnisse vorliegen und für zeitkritische Anwendungen, wie bspw. eine Fahrassistenz, verwendet werden können.

Die DE 10 2016 011 299 A1 beschreibt bspw. die Verwendung codierter Pulssequenzen um oben beschriebene Ambiguitäten zu vermeiden. Allerdings leidet die Detektionsreichweite auch bei Pulssequenzen, da insbesondere bei hohen Distanzen Messpulse nicht detektiert werden und eine Wiedererkennung der Sequenz nicht möglich ist.

WO 2012/135874 A1 offenbart ein Verfahren zur Entfernungsmessung von Umgebungszielen durch Laufzeitmessung von daran reflektierten Pulsen.

DE 10 2017 208 704 A1 offenbart eine Vorrichtung zur Entfernungsmessung umfassend eine Sendeeinrichtung, eine Empfangseinrichtung und eine Zufallsgeneratoreinrichtung.

### Darstellung der Erfindung: Aufgabe, Lösung, Vorteile

Der vorliegenden Erfindung liegt die Aufgabe zugrunde, ein Verfahren sowie eine Vorrichtung zur Distanzmessung derart zu verbessern, dass die maximale Detektionsreichweite bei gleichbleibendem Zeitbudget erhöht werden kann, die Spitzenleistung von Messpulsen bei gleichbleibender Detektionswahrscheinlichkeit verringert und eine Störung durch interne oder externe Pulse vermieden werden kann.

Die oben genannte Aufgabe wird durch ein Verfahren zur optischen Distanzmessung gelöst, bei dem innerhalb eines ersten Messintervalls eine erste Vielzahl von Messpulsen mittels eines Sendeelementes einer Sendeeinheit zu ersten Aussendezeitpunkten und innerhalb eines zweiten Messintervalls eine zweite Vielzahl von Messpulsen mittels eines Sendelementes einer Sendeeinheit zu zweiten Aussendezeitpunkten ausgesandt werden. Reflektierte Messpulse werden mittels eines dem Sendeelement zugeordneten Empfangselementes einer Empfangseinheit zu Empfangszeitpunkten empfangen.

Das Verfahren umfasst das Ermitteln einer ersten Menge von Laufzeiten für jeden empfangenen Messpuls. Dabei werden die Laufzeiten unter Verwendung der ersten Aussendezeitpunkte ermittelt. Die auf diese Art und Weise ermittelten Zeiten bilden die Laufzeiten der ersten Menge. Erfindungsgemäß wird hierfür von dem Empfangszeitpunkt jedes empfangenen Messpulses jeder erste Aussendezeitpunkt abgezogen. Auf gleiche Weise wird eine zweite Menge an Laufzeiten ermittelt. Im Detail umfasst das Verfahren das Ermitteln einer zweiten Menge von Laufzeiten für jeden empfangenen Messpuls unter Verwendung der zweiten Aussendezeitpunkte, und zwar erfindungsgemäß, indem jeder zweite Aussendezeitpunkt von dem Empfangszeitpunkt des jeweiligen empfangenen Messpulses abgezogen wird. Benachbarte Messintervalle schließen sich zeitlich unmittelbar aneinander an.

Die Aussendezeitpunkte werden vorzugsweise jeweils in Relation zu dem Startzeitpunkt des jeweiligen Messintervalls ermittelt. Die Empfangszeitpunkte werden bevorzugt in Relation zum Startzeitpunkt des ersten Messintervalls ermittelt.

Es werden somit sämtliche Kombinationen von Empfangszeitpunkten zu Aussendezeitpunkten berücksichtigt. Es werden somit auch Aussendezeitpunkte von Empfangszeitpunkten abgezogen, die zeitlich hinter diesen liegen. Dies ist bspw. der Fall, wenn der Empfangszeitpunkt (in Bezug auf den Startzeitpunkt des ersten Messintervalls) größer ist als der Aussendezeitpunkt (in Bezug auf den Startzeitpunkt des zweiten Messintervalls), obwohl der Aussendezeitpunkt hinter dem Empfangszeitpunkt liegt. Dennoch kann die korrekte Laufzeit einfach und effektiv ermittelt werden. Schwierige und aufwendige Vergleiche ausgesandter und empfangener Sequenzen von Pulsen kann somit entfallen.

Das Verfahren umfasst ferner das Erstellen mindestens eines Histogramms für das Empfangselement und das Eintragen der ersten Menge und/oder der zweiten Menge an Laufzeiten in das Histogramm. In anderen Worten kann mindestens ein, insbesondere genau ein, Histogramm für jedes Messintervall erstellt werden. Ferner können Messintervalle in ein gemeinsames Histogramm eingetragen werden. Ferner können einzeln erstellte Histogramme zu einem gemeinsamen Histogramm addiert werden.

Insbesondere wird das vorliegende Verfahren mittels einer Sendeeinheit, umfassend eine Vielzahl von Sendeelementen und einer Empfangseinheit, umfassend eine Vielzahl von Empfangselementen durchgeführt. Insbesondere ist jedes Sendeelement der Sendeeinheit einem definierten Unterbereich des Messbereiches zugeordnet, in anderen Worten einem Raumelement des Messbereiches. Gleiches gilt für die Empfangseinheit. Jedem Empfangselement ist ebenfalls ein Unterbereich des Messbereiches zugeordnet. Dabei ergibt sich eine eineindeutige Zuordnung zwischen Sendeelementen der Sendeeinheit und Empfangselementen der Empfangseinheit. Aus der Tatsache, welches Empfangselement somit einen Messpuls empfängt, kann ein Rückschluss über die Position des reflektierenden Objektes, an der der Messpuls reflektiert wurde, geschlossen werden.

Bei einem reflektierten Messpuls handelt es sich um einen Messpuls, der zuvor ausgesendet wurde, sodass sich durch die Reflektion an einem Objekt seine Ausbreitungsrichtung verändert hat. Man kann den reflektierten Messpuls somit als Echo des ausgesendeten Messpulses verstehen. Insbesondere wird mittels des Verfahrens die Laufzeit der Messpulse zu den Objekten, an denen diese reflektiert wurden, ermittelt und aus dieser mithilfe der Lichtgeschwindigkeit die von dem jeweiligen Messpuls zurückgelegte Distanz zu dem Objekt bestimmt.

Eine optische Distanzmessung zeichnet sich dadurch aus, dass unter Ausnutzung von optischen Signalen, hier optischen Messpulsen, Distanzen bestimmt werden. Unter dem Begriff "Distanz" ist eine Entfernung zu verstehen. Unter der vom Messpuls zurückgelegten Distanz ist die Strecke zwischen dem Sendeelement, das den Messpuls ausgesandt hat, und dem Objekt, das diesen reflektiert hat, plus der Strecke zwischen dem Objekt und dem Empfangselement, das den entsprechenden reflektierten Messpuls empfangen hat, zu verstehen. Insbesondere umfasst das Verfahren die Berücksichtigung der genauen Position des Sendeelementes und des Empfangselementes, insbesondere in Relation zueinander. Da es sich bei dem mindestens einen Objekt typischerweise um ein dreidimensionales Objekt handelt, sodass einige Bereiche des Objektes näher und andere Bereiche des Objektes weiter entfernt angeordnet sein können, ist mit dem Begriff "Distanz zu dem Objekt" die Entfernung zu zumindest einer Stelle des Objektes gemeint, und zwar der Stelle, auf die der Messpuls aufgetroffen und an der dieser reflektiert wurde. Mit Laufzeit ist die Zeit zu verstehen, die der Messpuls für die zuvor beschriebene Distanz gebraucht hat.

Das Verfahren dient bevorzugterweise zur Distanzmessung zur Anwendung in der fahrerlosen Navigation oder Fahrassistenz von Fahrzeugen.

Bei einem Messpuls handelt es sich insbesondere um ein elektromagnetisches, insbesondere um ein optisches Signal. Dieses Signal hat vorzugsweise eine Wellenlänge, die nicht aus dem für das menschliche Auge sichtbaren Bereich stammt. Vorzugsweise wird aus Sicherheitsgründen unsichtbares Infrarot verwendet. Da es sich beim Messpuls um ein elektromagnetisches Signal handelt und somit die Geschwindigkeit des Messpulses bekannt ist, kann aus der Laufzeit eines Messpulses mithilfe der Lichtgeschwindigkeit darauf geschlossen werden, welche Strecke der Messpuls zurückgelegt hat.

Bei der Ermittlung von ersten Mengen von Laufzeiten werden die empfangenen Messpulse auf eine ganz besondere Art und Weise ausgewertet. Indem die Empfangszeitpunkte zu allen möglichen Aussendezeitpunkten in Relation gesetzt werden, findet eine vielfache Kompensation statt, wobei unter einer Kompensation eine Verschiebung des Empfangszeitpunktes eines empfangenen Messpulses in dem Histogramm auf Basis eines Aussendezeitpunktes zu verstehen ist. In anderen Worten wird jeder Messpuls um jede plausible bzw. mögliche Aussendezeit kompensiert, wobei alle Ergebnisse in ein Histogramm eingetragen werden.

Auf eine solche Weise ergibt sich für jeden Messpuls genau ein "korrekter Eintrag", da der Empfangszeitpunkt mit dem korrekten Aussendezeitpunkt kompensiert wurde. Allerdings ergibt sich auch eine Vielzahl von "falschen Einträgen", da der Empfangszeitpunkt eines Messpulses mit "falschen Aussendezeitpunkten", d. h. Aussendezeitpunkten von anderen Messpulsen, kompensiert wurde. Dadurch, dass allerdings innerhalb eines Messbereiches eine Vielzahl von Messpulsen ausgesandt wurde, ist nicht bekannt, welcher dieser Aussendezeitpunkte korrekt ist. Dies wird durch das vorliegende Verfahren gelöst. Es erhöht die Einträge in das Histogramm, wobei sich die Einträge der "korrekten Kompensationen" an nur einer Position überlagern. Alle weiteren Laufzeiten, die sich durch Kompensation mit "falschen Aussendezeitpunkten" ergeben, tauchen zusätzlich als Störung symmetrisch um diese korrekte Position im Histogramm auf. Die erste und zweite Menge an Laufzeiten für einen Messpuls umfassen somit alle möglichen Laufzeiten, wobei nur eine dieser "korrekt" ist, da der richtige Aussendezeitpunkt der Ermittlung zugrunde lag.

Es kann somit die korrekte Distanz zu einem Objekt, an dem die Messpulse reflektiert wurden, ermittelt werden. Insbesondere umfasst das Verfahren das Ermitteln einer Distanz auf Basis des Histogramms, die insbesondere dem Empfangselement zugeordnet werden kann. Dies geschieht vor allem durch Ermittlung der Laufzeit, an dem am meisten Einträge vorliegen. Insbesondere entspricht dies der "korrekten" Laufzeit, aus der die Distanz auf einfache Weise durch Berücksichtigung der Lichtgeschwindigkeit ermittelt werden kann.

Da eine Vielzahl von Messpulsen ausgesandt werden, jedoch entsprechende Ambiguitäten eindeutig gelöst werden können, kann die maximale Detektionsreichweite bei gleichbleibendem Zeitbudget erhöht werden und/oder die Spitzenleistung der Messpulse bei ebenfalls gleichbleibender Detektionswahrscheinlichkeit verringert wird. Insbesondere die Erhöhung der Messpulse pro Zeiteinheit erhöht die Detektionswahrscheinlichkeit und das Signal zu Rausch Verhältnis. Die vorliegende Erfindung schafft es somit die Limitierung des Zeitbudgets (basierend bspw. durch die Anforderung an die Bildsequenz um eine Szene mit Bewegung zu erfassen) und die Limitierung der Energie (basierend auf der Augensicherheit) zu lösen.

Die Vielzahl der Messpulse, die innerhalb eines Messintervalls ausgesandt werden, kann auch als Pulssequenz verstanden werden. Unter dem Begriff ist insbesondere eine zeitliche Abfolge von Messpulsen gemeint, die durch die Anzahl der Messpulse, deren Pulslängen und in zeitlichen Pulsabständen zwischen den Messpulsen bestimmt ist. Allerdings wird im vorliegenden Verfahren, auch wenn man die Messpulse als Pulssequenz verstehen kann, der gesamten Pulssequenz nicht eine einzige Laufzeit zugeordnet, so wie dies aus dem Stand der Technik bekannt ist. Stattdessen wird jeder Messpuls einzeln ausgewertet und dem Messpuls eine korrekte und eine Vielzahl von "falschen Laufzeiten" zugeordnet.

Der erste Messintervall und der zweite Messintervall sind insbesondere nicht identisch. Vorzugsweise weisen diese jeweils einen Startzeitpunkt und einen Endzeitpunkt auf, wobei vorzugsweise die Startzeitpunkte und/oder die Endzeitpunkte nicht zusammenfallen.

Das erste und/oder das zweite Messintervall weisen vorzugsweise eine Länge auf, wobei die Länge auf die einfache oder doppelte Länge des Messbereiches abgestimmt ist. Die Messintervalle sind insbesondere gleich lang, wobei die Länge des Messintervalls derart gewählt ist, dass diese der Zeit entspricht, die ein Messpuls braucht, um den Messbereich einmal (d.h. bis zum Ende des Messbereichs) oder zweimal (d.h. bis zum Ende des Messbereichs und wieder zurück) gänzlich zu durchlaufen..

Die Länge des Messintervalls entspricht somit einem Aussendefenster, in dem Messpulse ausgesandt werden. Das Detektionsintervall, in dem Messpulse empfangen werden können, kann gleichzeitig mit dem entsprechenden, vorzugsweise dem ersten, Messintervall beginnen.

Ferner kann die Länge des Detektionsintervalls der doppelten oder vierfachen Länge des Messintervalls entsprechen. Das Verfahren umfasst insbesondere das Merken der Aussendezeitpunkte der Messintervalle, sodass Empfangszeitpunkte zu diesen in Relation gesetzt werden können.

Es kann jedem Messintervall ein Detektionsintervall zugeordnet sein. Dann überlappt der Detektionsbereich insbesondere mit dem nachfolgenden, insbesondere zweiten, Messintervall oder umfasst diesen komplett.

Ferner kann mehreren Messintervallen, insbesondere dem ersten und dem zweiten Messintervall, ein gemeinsames Detektionsintervall zugeordnet sein. Dann beginnt das Detektionsintervall mit dem Startzeitpunkt des ersten Messintervalls und endet vorzugsweise, nachdem nach dem Endzeitpunkt des zweiten oder letzten Messintervalls noch die Dauer eines weiteren Messintervalls verstrichen ist.

Dabei können der erste und der zweite Messintervall überlappend sein. Der Startzeitpunkt des zweiten Messintervalls liegt somit zeitlich vor dem Endzeitpunkt des ersten Messintervalls. Insbesondere schließt sich der erste Messintervall und der zweite Messintervall direkt aneinander an.

Ferner können der erste Messintervall und der zweite Messintervall zeitlich beanstandet zueinander sein, sich demnach nicht direkt aneinander anschließen. Der Startzeitpunkt des zweiten Messintervalls liegt somit hinter dem Endzeitpunkt des ersten Messintervalls, wobei sich dennoch das Detektionsintervall und der zweite Messintervall zumindest überlappen. Insbesondere umfasst der Detektionsbereich stets das zweite Messintervall. Dies bedeutet, obwohl noch Messpulse eines Messintervalls unterwegs sind und aufgrund des vorzugsweise doppelt langen Detektionsintervalls noch detektiert werden können, kann sich bereits ein neues Messintervall mit der Aussendung von neuen Messpulsen anschließen. Die Pulssequenzen benachbarter Messpulse sind somit gleichzeitig "on air".

Bevorzugterweise umfasst das Verfahren das Durchführen weiterer Messungen in weiteren Messintervallen, wobei sich benachbarte Messintervalle zeitlich unmittelbar aneinander anschließen.

Insbesondere weist das Histogramm die Länge der Messintervalle auf. Insbesondere werden nur Laufzeiten in das Histogramm eingetragen, die größer als 0 und kleiner als die Länge des Messintervalls sind.

Insbesondere kann in den Messintervallen eine gleiche Anzahl von Messpulsen ausgesandt werden, bspw. eine Anzahl N. Da innerhalb eines Messintervalls sowohl die innerhalb dieses Messintervalls ausgesandten Messpulse als auch die innerhalb des vorherigen Messintervalls ausgesandten Messimpulse empfangen werden können, können daher 0 bis 2 N Messpuls empfangen werden, wobei N für die Anzahl der ausgesandten Messpulse pro Messintervall steht.

Ferner bevorzugt können benachbarte Messpulse der Vielzahl von innerhalb eines Messintervalls ausgesandter Messpulse einen zufälligen Abstand zueinander aufweisen. Insbesondere können sich die Aussendezeitpunkte der Messpulse des ersten Messintervalls und des zweiten Messintervalls oder benachbarter Messintervalle unterscheiden. Aufgrund der Zufälligkeit der Positionen einzelner Messpulse innerhalb einer Sequenz ist innerhalb der Sequenzen die Auswertung und somit die Bestimmung der Distanz robust gegenüber Störungen von eigenen benachbarten Sequenzen als auch Störungen von außerhalb, da sie sich über das Histogramm verteilen.

Auch verteilen sich durch die zufälligen Aussendezeitpunkte die falschen Einträge im Histogramm zufällig, sodass die korrekten Einträge, die sich überlagern, deutlich hervorstechen.

Ferner bevorzugt kann die Vielzahl von innerhalb des ersten oder zweiten Messintervalls ausgesandten Messpulsen codiert sein. Dabei unterscheiden sich mindestens zwei Messpulse, die im ersten Messintervall oder im zweiten Messintervall ausgesandt wurden, insbesondere durch ihre Pulsform. Insbesondere kann sich jeder Messpuls von jedem anderen Messpuls unterscheiden, es können jedoch auch nur zwei unterschiedliche Codierungszustände möglich sein. Ferner können sich Messpulse durch ihre Pulslänge unterscheiden. Unter einem Codierungszustand kann somit eine Pulsform und/oder eine Pulslänge verstanden werden.

Basierend auf den Zuständen kann, wie oben beschrieben, ein Histogramm pro Codierungszustand erstellt werden. Das Verfahren kann dafür das Merken der Codierungszustände der ausgesandten Messpulse und das Ermitteln der Codierungszustände der empfangenen Messpulse umfassen. Das Ermitteln einer ersten Menge von Laufzeiten für jeden empfangenen Messpuls berücksichtigt nur die Aussendezeitpunkte der Messpulse mit gleichem Codierungszustand. Das Gleiche gilt für die zweite Menge von Laufzeiten. Für jeden Codierungszustand wird dann ein eigenes Histogramm erstellt, in das die Laufzeiten der entsprechend codierten empfangenen Messpulse eingetragen werden. Dadurch verringern sich die Einträge in die jeweiligen Histogramme, da Messpulse bereits auf Basis ihrer Codierungszustände unterschieden werden können. Vorzugsweise kann der Messbereich in mindestens einen short-Abschnitt, einen mid-Abschnitt und einen far-Abschnitt gegliedert werden. Der short-Abschnitt ist der räumlich nächste Abschnitt, vorzugsweise direkt angrenzend an eine Vorrichtung zur Ausführung des Verfahrens, während der far-Abschnitt den hintersten Abschnitt darstellt, in anderen Worten einen Abschnitt am Ende des Messbereichs. Der mid-Abschnitt liegt dazwischen. Beispielsweise kann das erste Drittel des Messbereichs den short-Abschnitt, das mittlere Drittel den mid-Abschnitt und das letzte Drittel das far-Abschnitt darstellen. Insbesondere weist jedes Empfangselement einen Abbildungsbereich, insbesondere eine photosensitive Fläche, auf, wobei dieser in unterschiedliche Bereiche aufgeteilt werden kann, insbesondere in Abhängigkeit davon in welchem Abschnitt des Messbereichs der Messpuls reflektiert wurde. Reflektierte Messpulse aus dem short-Abschnitt, dem mid-Abschnitt und dem far-Abschnitt werden somit an unterschiedlichen Bereichen eines Empfangselementes empfangen.

In anderen Worten liegt eine Verschiebung des Abbildungsbereichs vor, auf dem ein Puls auf einem Empfangselement auftritt, und zwar in Abhängigkeit von der Entfernung des Objekts, an dem der Messpuls reflektiert wurde. Die Verschiebung resultiert aus einem Parallaxefehler.

Es kann ein short-Intervall des Messintervalls und ein short-Bereich des Empfangselementes dem short-Abschnitt, ein mid-Intervall des Messintervalls und ein mid-Bereich des Empfangselementes dem mid-Abschnitt und ein far-Intervall des Messintervalls und ein far-Bereich des Empfangselementes dem far-Abschnitt zugeordnet werden. Dies entspricht den zeitlichen Abschnitten des Messintervalls, in die die entsprechenden Laufzeiten in die unterschiedlich entfernten Abschnitte des Messintervalls fallen. Beispielsweise kann das erste Drittel des Messintervalls das short-Intervall, das mittlere Drittel das mid-Intervall und das letzte Drittel das far-Intervall darstellen.

Die verschiedenen Bereiche des Abbildungsbereichs des Empfangselementes sind separat ansteuerbar. Vorzugsweise kann der short-Bereich des Empfangselementes weniger sensitiv ausgebildet sein als der mid-Bereich und der far-Bereich des Empfangselementes. Dies dient dazu ein "Blenden" des short-Bereichs zu verhindern, bspw. da sich ein hochreflektiertes Objekt in sehr naher Entfernung befindet.

Es kann der short-Bereich, der mid-Bereich und der far-Bereich des Empfangselementes auf Basis des short-Intervalls, des mid-Intervalls und des far-Intervalls des ersten Messintervalls gesteuert werden. Insbesondere werden die verschiedenen Bereiche des Empfangselementes genau dann aktiviert, wenn sich die Messung im entsprechenden short-Intervall, mid-Intervall oder far-Intervall befindet. Im Detail wird der short-Bereich während des short-Intervalls, der mid-Bereich während des mid-Intervalls und der far-Bereich während des far-Intervalls aktiviert. Außerhalb werden die entsprechenden Bereiche deaktiviert.

Insbesondere erfolgt die Steuerung lediglich auf Basis des ersten Messintervalls, wobei das Aussenden der Messpulse des zweiten Messintervalls keinen Einfluss auf die Aktivierung der Bereiche hat. Vorteilhaft kann sein, alle Bereiche des Empfangselementes jedoch im entsprechenden short-Intervall des zweiten Messintervalls zu deaktivieren, um ein Blenden zu vermeiden.

Insbesondere kann auf das zweite Messintervall ein drittes Messintervall folgen, auf Basis dessen die Bereiche gesteuert werden. Vorzugsweise steuert somit jedes zweite Messintervall die Aktivierung bzw. Deaktivierung der Bereiche des Empfangselementes, während die dazwischen liegenden Messintervalle die Steuerung bis auf das Deaktivieren aller Bereiche während des zugehörigen short-Intervalls nicht beeinflussen.

Insbesondere werden mittels des Verfahrens die oben genannten Schritte für mehrere Sendeelemente einer Sendeeinheit und entsprechende Empfangselemente einer Empfangseinheit, insbesondere alle Sendeelemente und Empfangselemente, durchgeführt. In anderen Worten werden von mehreren Sendeelementen entsprechende Messpulse innerhalb eines Messintervalls zu Aussendezeitpunkten ausgesandt und zu Empfangszeitpunkten jeweils von entsprechenden Empfangselementen empfangen, wobei dann für die von jedem Empfangselement empfangenen Messpulse jeweils eine erste Menge und eine zweite Menge an Laufzeiten bestimmt werden. Dabei wird für alle Empfangselemente jeweils ein entsprechendes Histogramm erstellt.

In einem weiteren Aspekt betrifft die Erfindung eine Vorrichtung zur Durchführung des oben beschriebenen Verfahrens. Die Vorrichtung ist somit zur Durchführung eines erfindungsgemäßen Verfahrens ausgebildet.

Insbesondere umfasst die Vorrichtung eine Sendeeinheit und eine Empfangseinheit. Insbesondere umfasst die Sendeeinheit Sendeelemente und die Empfangseinheit Empfangselemente, insbesondere Sensorpixel. Die Sendeelemente und Empfangselemente sind vorzugsweise an einer Sendematrix beziehungsweise einer Empfangsmatrix zusammengefasst. Eine Matrix kann insbesondere als dreidimensionaler, insbesondere plattenförmiger, Körper verstanden werden, auf dessen einen Oberfläche die entsprechenden Elemente angeordnet sind.

Insbesondere handelt es sich bei der Vorrichtung um eine Scanvorrichtung, bevorzugterweise einen LIDAR-Sensor. Vorzugsweise handelt es sich bei den Sendeelementen jeweils um einen Laser, insbesondere um VCSEL. Ferner kann es sich bei den Sendeelementen um Laserdioden, Faserlaser oder LEDs handeln. Ferner können die Sendeelemente adressierbare Flüssigkristalle umfassen. Ferner kann es sich bei der Sendeeinheit um einen Optical Phased Array handeln. Die Sendeelemente sind einzeln ansteuerbar.

Bei den Empfangselementen handelt es sich insbesondere um lineare oder nichtlineare Detektoren, vor allem in Form eines Arrays, vorzugsweise einen Focal Plane Array, insbesondere einen APD Array, am meisten bevorzugt einen SPAD Array. Ferner kann der Array Quantenfilmstrukturen basierend auf quantum dots umfassen.

Die Empfangselemente sind einzeln ansteuerbar bzw. aktivierbar. Insbesondere umfasst jedes Empfangselement unterschiedliche Bereiche, insbesondere einen short-Bereich zum Empfangen von Messpulsen aus einem short-Abschnitt des Messbereichs, einen mid-Bereich zum Empfangen von Messpulsen aus einem mid-Abschnitt des Messbereichs und einen far-Bereich zum Empfangen von Messpulsen aus einem far-Abschnitt des Messbereichs. Dabei sind die verschiedenen Bereiche einzeln ansteuerbar bzw. aktivierbar und auswertbar.

Ferner bevorzugt umfasst die Vorrichtung mindestens eine Auswerteeinheit, die vorzugsweise dazu ausgebildet ist, die erste Menge und zweite Menge an Laufzeiten zu ermitteln und ein Histogramm zu erstellen. Ferner kann die Auswerteeinheit dazu ausgebildet sein aus dem Histogramm eine Distanz abzulesen.

Zudem kann die Vorrichtung eine Steuereinheit umfassen, die dazu ausgebildet ist, die Sendeeinheit, die Empfangseinheit und die Auswerteeinheit anzusteuern.

Ferner bezieht sich die vorliegende Erfindung auf ein Computerprogrammprodukt, das ein computerlesbares Speichermedium umfasst, auf dem ein Programm gespeichert ist, das es einem Computer ermöglicht, nachdem es in den Speicher des Computers geladen worden ist, ein oben beschriebenes Verfahren, gegebenenfalls im Zusammenspiel mit einer oben beschriebenen Vorrichtung, durchzuführen. Weiterhin betrifft die Erfindung ein computerlesbares Speichermedium, auf dem ein Programm gespeichert ist, das es einem Computer ermöglicht, nachdem es in den Speicher des Computers geladen worden ist, ein oben beschriebenes Verfahren, gegebenenfalls im Zusammenspiel mit einer oben beschriebenen Vorrichtung, durchzuführen.

### Kurze Beschreibung der Zeichnungen

Es zeigen schematisch:
- Figur 1: ein Verfahrensschema eines erfindungsgemäßen Verfahrens;
- Figur 2: zwei direkt aufeinander folgende Messintervalle;
- Figur 3: die Erstellung eines Histogramms auf Basis einer ersten Messung nach Empfang zweier Messpulse;
- Figur 4: die Erstellung eines Histogramms auf Basis einer zweiten Messung nach Empfang zweier Messpulse; und
- Figur 5:: die Histogramme der Figuren 3 und 4 sowie ein gemeinsames Histogramm.

### Bevorzugte Ausführungsformen der Erfindung

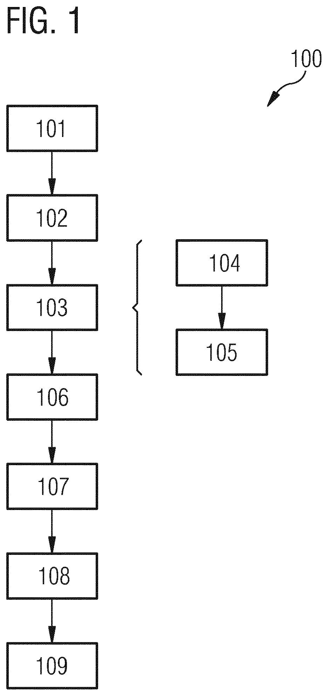

In Figur 1 ist ein Verfahrensdiagramm eines erfindungsgemäßen Verfahrens 100 dargestellt.

Das Verfahren 100 umfasst das Aussenden 101 einer ersten Vielzahl von Messpulsen 13 innerhalb eines ersten Messintervalls 10 zu ersten Aussendezeitpunkten und das Aussenden 101 einer zweiten Vielzahl von Messpulsen 13 innerhalb eines zweiten Messintervalls 11 zu zweiten Aussendezeitpunkten. Das Verfahren 100 umfasst den Empfang 103 reflektierter Messpulse mittels eines dem Sendeelement zugeordneten Empfangselementes einer Empfangseinheit zu Empfangszeitpunkten.

Dabei können zuvor einem short-Abschnitt des Messbereichs, ein short-Bereich des Empfangselementes und ein short-Intervall des entsprechenden Messintervalls zugeordnet werden. Ferner kann einem mid-Abschnitt des Messbereichs ein mid-Intervall des Messintervalls und ein mid-Bereich des Empfangselementes und einem far-Abschnitt des Messbereichs ein far-Bereich des Empfangselementes und ein far-Intervall des Messintervalls zugordnet werden 104. Es kann der short-Bereich, der mid-Bereich und der far-Bereich auf Basis des short-Intervalls, des mid-Intervalls und des far-Intervalls des ersten Messintervalls 10 gesteuert werden 105.

Das Verfahren 100 umfasst das Ermitteln 106 einer ersten Menge von Laufzeiten und das Ermitteln 107 einer zweiten Menge von Laufzeiten für jeden empfangenen Messpuls. Ferner umfasst das Verfahren 100 das Erstellen 108 eines Histogramms für das Empfangselement und das Eintragen der ersten Menge und/oder zweiten Menge an Laufzeiten in das Histogramm 15. Ferner kann das Verfahren das Ermitteln 109 einer Distanz aus dem Histogramm 15 umfassen.

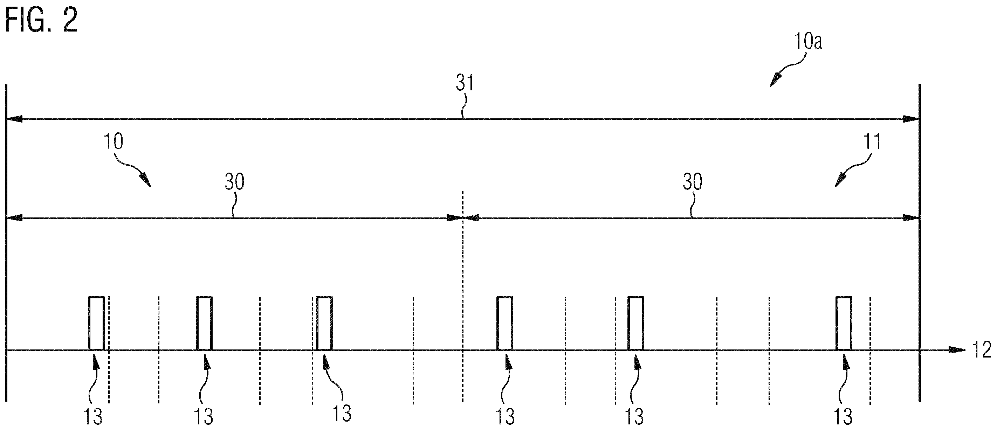

Figur 2 zeigt schematisch zwei direkt aufeinander folgende Messintervalle, einen ersten Messintervall 10 und einen zweiten Messintervall 11, die gegenüber der Zeit 12 aufgetragen sind. Es ist auch das Detektionsintervall 10a gezeigt, das gleichzeitig mit ersten Messintervall 10 beginnt, jedoch doppelt so lange ist und sich somit auch über den zweiten Messintervall 11 erstreckt. Das Detektionsintervall 10a kann dem ersten Messintervall 10 oder beiden Messintervallen als gemeinsames Detektionsintervall 10a zugeordnet sein. In Figur 2 sind die Längen 30 der Messintervalle und die Länge 31 des Detektionsintervalls 10a deutlich gezeigt. In jedem Messintervall werden drei Messpulse 13 ausgesandt, deren zeitliche Abstände zufällig gewählt sind.

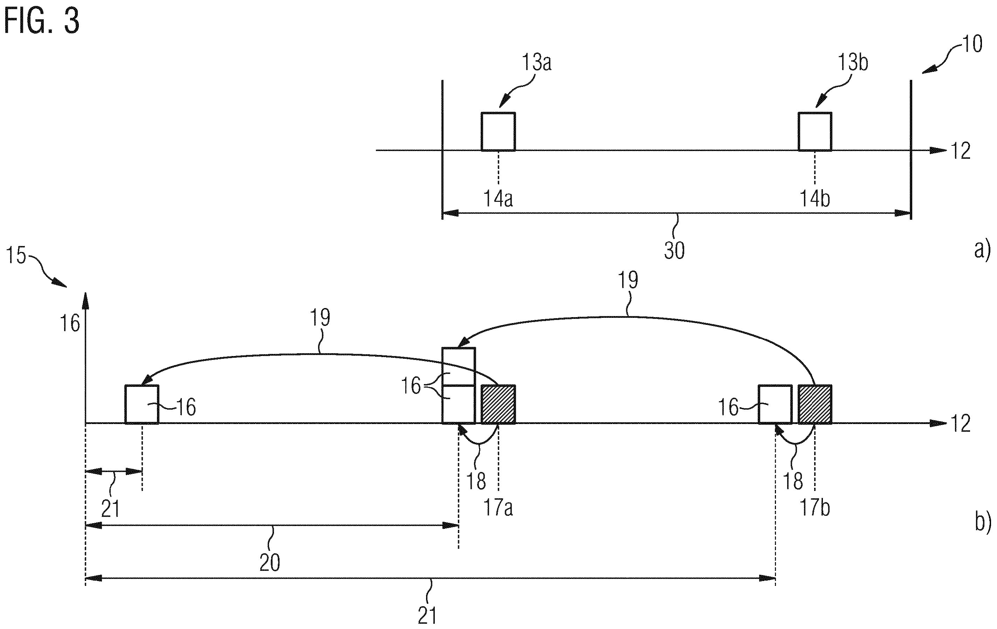

In Figur 3 ist die Erstellung eines Histogramms 15 einer ersten Messung eines ersten Messintervalls 10 nach Empfang zweier Messpulse 13, eines ersten Messpulses 13a und eines zweiten Messpulses 13b, in vereinfachter Weise dargestellt. Vereinfacht ist es daher dargestellt, da beide Messpulse 13 aus demselben Messintervall stammen und angenommen ist, dass im vorherigen Messintervall keine Messpulse ausgesandt wurden. In anderen Worten handelt es sich um ein zeitlich erstes Messintervall 10. Deutlich sind in Abschnitt a) der Figur 3 die Aussendezeitpunkte der beiden Messpulse 13 zu sehen, und zwar ein erster Aussendezeitpunkt 14a des ersten Messpulses 13a und ein zweiter Aussendezeitpunkt 14b des zweiten Messpulses 13b.

In Abschnitt b) der Figur 3 ist das Histogramm 15 gezeigt, das Einträge 16 über die Zeit 12 ab Beginn des ersten Messintervalls 10 aufträgt. Schraffiert dargestellt sind die Positionen im Histogramm, die ohne jegliche Berücksichtigung der Aussendezeitpunkte eingetragen werden würden. In anderen Worten sind dies die "unkorrigierten" gemessenen Empfangszeitpunkte der beiden empfangenen Messpulse, und zwar den ersten Empfangszeitpunkt 17a für den ersten Messpulse 13a und den zweiten Empfangszeitpunkt 17b für den zweiten Messpulse 13b.

Die kurzen Pfeile auf der unteren Seite des Histogramms 15 zeigen eine Verschiebung dieser "unkorrigierten Positionen um den ersten Aussendezeitpunkt 14a des ersten Messpulses 13a. Die oben dargestellten längeren Pfeile zeigen die jeweilige Verschiebung 19 um den zweiten Aussendezeitpunkt des zweiten Messpulses 13b. Die Verschiebungen sorgen für eine Kompensation hinsichtlich der verschiedenen Aussendezeitpunkte. In anderen Worten werden sämtliche mögliche Aussendezeitpunkte berücksichtigt, indem diese von den Empfangszeitpunkten abgezogen werden. Die schraffierten Einträge werden nicht eingetragen, während die anderen durch die Kompensationen ermittelten Laufzeiten eingetragen werden. Insgesamt werden somit vier Laufzeiten ermittelt, die die erste Menge an Laufzeiten bilden, und an den jeweiligen Positionen eingetragen werden. Deutlich ist zu sehen, wie sich zwei Einträge, und zwar jeweils einer basierend auf dem Empfang des ersten Messpulses 13a und einer basierend auf dem Empfang des zweiten Messpulses 13b an einer Position überlagern. Dies markiert die korrekte Laufzeit 20, während sich die falschen Laufzeiten 21 im Histogramm 15 symmetrisch um die korrekte Laufzeit 20 verteilen.

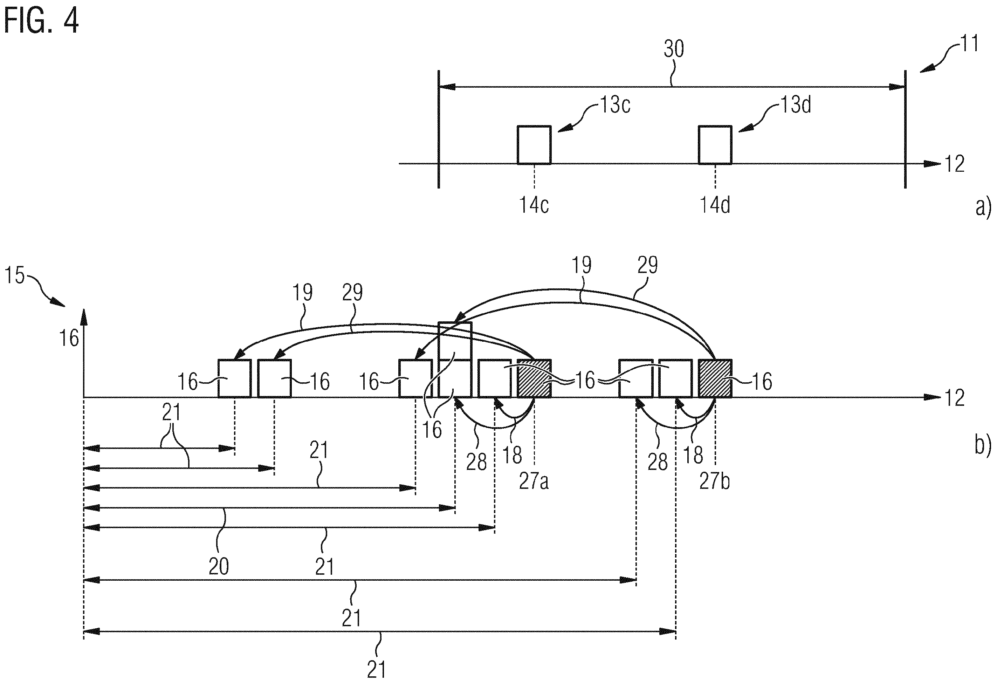

In Figur 4 ist eine zweite Messung eines zweiten Messintervalls 11 gezeigt. In Abschnitt a) ist der erste Aussendezeitpunkt 14c eines ersten Messpulses 13c des zweiten Messintervalls 11 und ein zweiter Aussendezeitpunkt 14d eines zweiten Messpulses 13d des zweiten Messintervalls 11 zu sehen.

In Abschnitt b) der Figur 4 ist gezeigt, wie die schraffiert dargestellten Empfangszeitpunkte, und zwar der erste Empfangszeitpunkt 27a für den ersten Messpuls 13c und der zweite Empfangszeitpunkt 27b für den zweiten Messpuls 13d, im Histogramm kompensiert werden. Kompensiert wird durch entsprechende Verschiebungen, und zwar zunächst durch eine entsprechende Verschiebung 18 um den ersten Aussendezeitpunkt 14a des ersten Messintervalls 10, eine Verschiebung 19 um den zweiten Aussendezeitpunkt 14b des ersten Messintervalls 10, eine Verschiebung 28 um den ersten Aussendezeitpunkt 14c des zweiten Messintervalls 11 und eine Verschiebung 29 um den zweiten Aussendezeitpunkt 14d des zweiten Messintervalls 11. Kompensiert wird jeweils durch Abzug der entsprechenden Aussendezeitpunkte von dem jeweiligen Empfangszeitpunkt.

Erneut ist deutlich zu sehen, wie sich an der korrekten Position der Laufzeit jeweils ein Eintrag basierend auf beiden Messpulsen überlagert, während sich sämtliche anderen Einträge symmetrisch darum verteilen. Durch die Kompensation hinsichtlich der Aussendezeitpunkte der Messpulse desselben Messintervalls wird eine erste Menge gebildet, wobei gegenüber den Aussendezeitpunkten des vorigen Messintervalls eine zweite Menge an Laufzeiten gebildet wird.

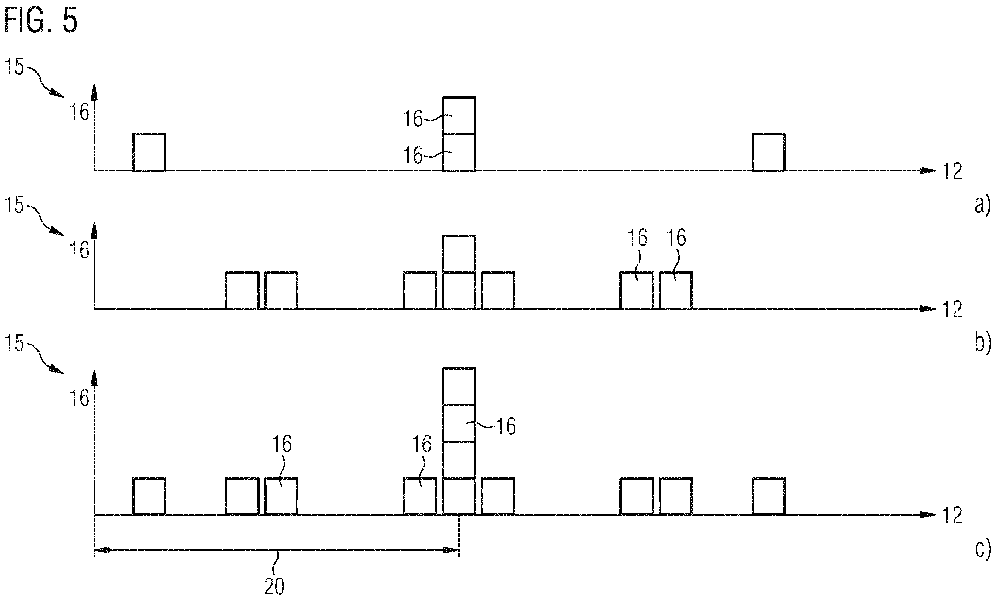

In Figur 5 sind die Histogramme 15 der verschiedenen Messungen der Figuren 3 und 4 gezeigt, wobei Abschnitt a) das Histogramms 15 der ersten Messung des ersten Messintervalls 10 der Figur 3 zeigt und Abschnitt b) das Histogramm 15 der zweiten Messung des zweiten Messintervalls 11 der Figur 4.

In Abschnitt c) ist ein überlagertes Histogramm 15 der beiden Messungen gezeigt, das deutlich macht, wie sich an der korrekten Position jeweils ein Eintrag sämtlicher empfangener Messpulse überlagern und sich somit durch Ermitteln des Maximums die korrekte Laufzeit 20 und somit Distanz aus dem Histogramm auf einfachste Weise ablesen lässt.

### Bezugszeichenliste

- 10: erstes Messintervall
- 10a: Detektionsintervall
- 11: zweites Messintervall
- 12: Zeit
- 13: Messpuls
- 13a: erster Messpuls des ersten Messintervalls
- 13b: zweiter Messpuls des ersten Messintervalls
- 13c: erster Messpuls des zweiten Messintervalls
- 13d: zweiter Messpuls des zweiten Messintervalls
- 14a: erster Aussendezeitpunkt des ersten Messintervalls
- 14b: zweiter Aussendezeitpunkt des ersten Messintervalls
- 14c: erster Aussendezeitpunkt des zweiten Messintervalls
- 14d: zweiter Aussendezeitpunkt des zweiten Messintervalls
- 15: Histogramm
- 16: Eintrag
- 17a: erster Empfangszeitpunkt des ersten Messintervalls
- 17b: zweiter Empfangszeitpunkt des ersten Messintervalls
- 18: Verschiebung um ersten Aussendezeitpunkt des ersten Messintervalls
- 19: Verschiebung um zweiten Aussendezeitpunkt des ersten Messintervalls

- 20: korrekte Laufzeit
- 21: falsche Laufzeit
- 27a: erster Empfangszeitpunkt des zweiten Messintervalls
- 27b: zweiter Empfangszeitpunkt des zweiten Messintervalls
- 28: Verschiebung um ersten Aussendezeitpunkt des zweiten Messintervalls
- 29: Verschiebung um zweiten Aussendezeitpunkt des zweiten Messintervalls

- 30: Länge eines Messintervalls
- 31: Länge des Detektionsintervalls

- 100: Verfahren
- 101: Aussenden einer ersten Vielzahl von Messpulse innerhalb eines ersten Messintervalls zu ersten Aussendezeitpunkten
- 102: Aussenden einer zweiten Vielzahl von Messpulse innerhalb eines zweiten Messintervalls zu zweiten Aussendezeitpunkten
- 103: Empfang reflektierter Messpulse mittels eines dem Sendeelement zugeordnetem Empfangselement einer Empfangseinheit zu Empfangszeitpunkten
- 104: Zuordnung eines short-Intervalls des Messintervalls und eines short-Bereichs des Empfangselementes zu einem short-Abschnitt des Messbereichs, eines mid-Intervall des Messintervalls und eines mid-Bereich des Empfangselementes zu einem mid-Abschnitt des Messbereichs, eines far-Intervall des Messintervalls und eines far-Bereich des Empfangselementes zu einem far-Abschnitt des Messbereichs
- 105: Steuerung des short-Bereichs, des mid-Bereichs und des far-Bereichs auf Basis des short-Intervalls, des mid-Intervalls und des far-Intervalls des ersten Messintervalls
- 106: Ermitteln einer ersten Menge von Laufzeiten für jeden empfangenen Messpuls
- 107: Ermitteln einer zweiten Menge von Laufzeiten für jeden empfangenen Messpuls
- 108: Erstellen eines Histogramms für das Empfangselement und das Eintragen der ersten Menge und/oder der zweite Menge an Laufzeiten
- 109: Ermitteln einer Distanz aus dem Histogramm

## Patentansprüche

1. Verfahren (100) zur optischen Distanzmessung,
wobei innerhalb eines ersten Messintervalls (10) eine erste Vielzahl von Messpulsen (13) mittels eines Sendelementes einer Sendeeinheit zu ersten Aussendezeitpunkten ausgesandt wird (101),
wobei innerhalb eines zweiten Messintervalls (11) eine zweite Vielzahl von Messpulsen (13) mittels des Sendelementes der Sendeeinheit zu zweiten Aussendezeitpunkten ausgesandt wird (102),
wobei das Verfahren (100) den Empfang (103) reflektierter Messpulse mittels eines dem Sendeelement zugeordneten Empfangselementes einer Empfangseinheit zu Empfangszeitpunkten umfasst,
**dadurch gekennzeichnet, dass**
das Verfahren (100) das Ermitteln (106) einer ersten Menge von Laufzeiten für jeden empfangenen Messpuls umfasst,
wobei die erste Menge von Laufzeiten unter Verwendung der ersten Aussendezeitpunkte ermittelt wird, wobei das Verfahren (100) das Ermitteln (107) einer zweiten Menge von Laufzeiten für jeden empfangenen Messpuls umfasst,
wobei die zweite Menge von Laufzeiten unter Verwendung der zweiten Aussendezeitpunkte ermittelt wird,
wobei die erste Menge von Laufzeiten unter Verwendung der ersten Aussendezeitpunkte derart ermittelt wird, indem jeder erste Aussendezeitpunkt von dem Empfangszeitpunkt des jeweiligen empfangenen Messpulses abgezogen wird, wobei die zweite Menge von Laufzeiten unter Verwendung der zweiten Aussendezeitpunkte derart ermittelt wird, indem jeder zweite Aussendezeitpunkt von dem Empfangszeitpunkt des jeweiligen empfangenen Messpulses abgezogen wird,
wobei sich das erste Messintervall (10) und das zweite Messintervall (11) zeitlich unmittelbar aneinander anschließen,
wobei das Verfahren (100) das Erstellen (108) mindestens eines Histogramms (15) für das Empfangselement und das Eintragen der ersten Menge und/oder der zweiten Menge an Laufzeiten in das Histogramm umfasst.

2. Verfahren nach Anspruch 1,
**dadurch gekennzeichnet, dass**
das erste Messintervall (10) und/oder das zweite Messintervall (11) eine Länge aufweist,
wobei die Länge auf die einfache oder doppelte Länge des Messbereichs abgestimmt ist.

3. Verfahren (100) nach einem der vorangehenden Ansprüche,
**dadurch gekennzeichnet, dass**
das Histogramm (15) die Länge des Messintervalls aufweist.

4. Verfahren (100) nach einem der Ansprüche 2 oder 3,
**dadurch gekennzeichnet, dass**
nur Laufzeiten in das Histogramm eingetragen werden, die größer als Null und kleiner als die Länge des Messintervalls sind.

5. Verfahren (100) nach einem der vorangehenden Ansprüche,
**dadurch gekennzeichnet, dass**
im ersten Messintervall (10) und im zweiten Messintervall (11) eine gleiche Anzahl von Messpulsen (13) ausgesandt wird.

6. Verfahren (100) nach einem der vorangehenden Ansprüche,
**dadurch gekennzeichnet, dass**
benachbarte Messpulse (13) der Vielzahl von innerhalb des ersten Messintervalls (10) ausgesandten Messpulse (13) und/oder benachbarte Messpulse (13) der Vielzahl der innerhalb des zweiten Messintervalls (11) ausgesandten Messpulse einen zufälligen Abstand zueinander aufweisen.

7. Verfahren (100) nach einem der vorangehenden Ansprüche,
**dadurch gekennzeichnet, dass**
die Vielzahl von innerhalb des ersten Messintervalls (10) und/oder die Vielzahl von innerhalb des zweiten Messintervalls (11) ausgesandten Messpulse (13) codiert sind.

8. Verfahren (100) nach einem der vorangehenden Ansprüche,
**dadurch gekennzeichnet, dass**
sich mindestens zwei der innerhalb des ersten Messintervalls (10) oder des zweiten Messintervalls (11) ausgesandten Messpulse durch ihre Pulsform unterscheiden.

9. Verfahren (100) nach einem der Ansprüche 1 oder 3 bis 8,
**dadurch gekennzeichnet, dass**
der Messbereich in mindestens einen short-Abschnitt, einen mid-Abschnitt und einen far-Abschnitt gegliedert wird,
wobei reflektierte Messpulse aus dem short-Abschnitt, dem mid-Abschnitt und dem far-Abschnitt an unterschiedlichen Bereichen eines Abbildungsbereiches des Empfangselementes empfangen werden,
wobei ein short-Intervall des Messintervalls und ein short-Bereich des Empfangselementes dem short-Abschnitt, ein mid-Intervall des Messintervalls und ein mid-Bereich des Empfangselementes dem mid-Abschnitt und ein far-Intervall des Messintervalls und ein far-Bereich des Empfangselementes dem far-Abschnitt zugeordnet werden.

10. Verfahren (100) nach Anspruch 9,
**dadurch gekennzeichnet, dass**
der short-Bereich, der mid-Bereich und der far-Bereich des Empfangselementes auf Basis des short-Intervalls, des mid-Intervalls und des far-Intervalls des ersten Messintervalls gesteuert werden.

11. Vorrichtung zur optischen Distanzmessung,
wobei die Vorrichtung eine Sendeeinheit umfassend mehrere Sendeelemente zum Aussenden von Messpulsen und eine Empfangseinheit umfassend mehrere Empfangselemente zum Empfangen reflektierter Messpulse aufweist, **dadurch gekennzeichnet, dass**
die Vorrichtung dazu ausgebildet ist ein Verfahren (100) nach einem der Ansprüche 1 bis 10 durchzuführen.

12. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren (100) gemäß einem der Ansprüche 1 bis 10 im Zusammenspiel mit einer Vorrichtung gemäß Anspruch 11 durchzuführen.

13. Computerlesbares Speichermedium, auf dem ein Programm gespeichert ist, das es einem Computer ermöglicht, nachdem es in den Speicher des Computers geladen worden ist, ein Verfahren gemäß einem der Ansprüche 1 bis 10 im Zusammenspiel mit einer Vorrichtung gemäß Anspruch 11 durchzuführen.

## Claims

1. Method (100) for optical distance measuring,
wherein within a first measuring interval (10) a first plurality of measuring pulses (13) is transmitted (101) by means of a transmitting element of a transmitting unit at first transmission times,
wherein within a second measuring interval (11) a second plurality of measuring pulses (13) is transmitted (102) by means of the transmitting element of the transmitting unit at second transmission times,
wherein the method (100) comprises receiving (103) reflected measuring pulses by means of a receiving element of a receiving unit assigned to the transmitting element at reception times,
**characterized in that**
the method (100) comprises determining (106) a first set of transit times for each received measuring pulse,
wherein the first set of transit times is determined using the first transmission times, wherein the method (100) comprises determining (107) a second set of transit times for each received measuring pulse,
wherein the second set of transit times is determined using the second transmission times,
wherein the first set of transit times is determined using the first transmission times by subtracting each first transmission time from the reception time of the respective received measuring pulse, wherein the second set of transit times is determined using the second transmission times by subtracting each second transmission time from the reception time of the respective received measuring pulse,
wherein the first measuring interval (10) and the second measuring interval (11) follow each other directly in time,
wherein the method (100) comprises generating (108) at least one histogram (15) for the receiving element and entering the first set and/or the second set of transit times into the histogram.

2. Method according to claim 1,
**characterized in that**
the first measuring interval (10) and/or the second measuring interval (11) has a length,
where the length is matched to the single or double length of the measuring area.

3. Method (100) according to one of the preceding claims,
**characterized in that**
the histogram (15) has the length of the measuring interval.

4. Method (100) according to one of claims 2 or 3,
**characterized in that**
only transit times that are greater than zero and smaller than the length of the measuring interval are entered in the histogram.

5. Method (100) according to one of the preceding claims,
**characterized in that**
an equal number of measuring pulses (13) is transmitted in the first measuring interval (10) and in the second measuring interval (11).

6. Method (100) according to one of the preceding claims,
**characterized in that**
adjacent measuring pulses (13) of the plurality of measuring pulses (13) transmitted within the first measuring interval (10) and/or adjacent measuring pulses (13) of the plurality of measuring pulses transmitted within the second measuring interval (11) have a random spacing from one another.

7. Method (100) according to one of the preceding claims,
**characterized in that**
the plurality of measuring pulses (13) transmitted within the first measuring interval (10) and/or the plurality of measuring pulses (13) transmitted within the second measuring interval (11) are coded.

8. Method (100) according to one of the preceding claims,
**characterized in that**
at least two of the measuring pulses transmitted within the first measuring interval (10) or the second measuring interval (11) differ in their pulse shape.

9. Method (100) according to one of claims 1 or 3 to 8,
**characterized in that**
the measuring area is divided into at least one short section, one mid section and one far section,
wherein reflected measuring pulses from the short section, the mid section and the far section are received at different areas of an imaging area of the receiving element,
wherein a short interval of the measuring interval and a short area of the receiving element are assigned to the short section, a mid interval of the measuring interval and a mid area of the receiving element are assigned to the mid section, and a far interval of the measuring interval and a far area of the receiving element are assigned to the far section.

10. Method (100) according to claim 9,
**characterized in that**
the short area, the mid area and the far area of the receiving element are controlled on the basis of the short interval, the mid interval and the far interval of the first measuring interval.

11. Device for optical distance measuring,
wherein the device has a transmitting unit comprising a plurality of transmitting elements for transmitting measuring pulses and a receiving unit comprising a plurality of receiving elements for receiving reflected measuring pulses,
**characterized in that**
the device is configured for carrying out a method (100) according to one of claims 1 to 10.

12. Computer program product comprising a computer-readable storage medium on which is stored a program which, after being loaded into the memory of the computer, enables a computer to perform a method (100) according to one of claims 1 to 10 in cooperation with a device according to claim 11.

13. Computer-readable storage medium on which is stored a program which, after being loaded into the memory of the computer, enables a computer to perform a method according to one of claims 1 to 10 in cooperation with a device according to claim 11.

## Revendications

1. Procédé (100) de mesure optique de distance,
dans lequel, à l'intérieur d'un premier intervalle de mesure (10), une première pluralité d'impulsions de mesure (13) est émise (101) au moyen d'un élément d'émission d'une unité d'émission à des premiers instants d'émission,
dans lequel, à l'intérieur d'un deuxième intervalle de mesure (11), une deuxième pluralité d'impulsions de mesure (13) est émise (102) au moyen de l'élément d'émission de l'unité d'émission à des deuxièmes instants d'émission,
le procédé (100) comprenant la réception (103) d'impulsions de mesure réfléchies au moyen d'un élément de réception d'une unité de réception associé à l'élément d'émission à des instants de réception,
**caractérisé en ce que**
le procédé (100) comprend la détermination (106) d'un premier ensemble de temps de transit pour chaque impulsion de mesure reçue,
dans lequel le premier ensemble de temps de transit est déterminé en utilisant les premiers instants d'émission, le procédé (100) comprenant la détermination (107) d'un second ensemble de temps de transit pour chaque impulsion de mesure reçue,
dans lequel le deuxième ensemble de temps de transit est déterminé en utilisant les deuxièmes instants d'émission,
dans lequel le premier ensemble de temps de transit est déterminé en utilisant les premiers instants d'émission de telle sorte que chaque premier instant d'émission est soustrait de l'instant de réception de l'impulsion de mesure reçue respective, dans lequel le second ensemble de temps de transit est déterminé en utilisant les seconds instants d'émission de telle sorte que chaque second instant d'émission est soustrait de l'instant de réception de l'impulsion de mesure reçue respective,
le premier intervalle de mesure (10) et le deuxième intervalle de mesure (11) se succédant directement dans le temps,
dans lequel le procédé (100) comprend la création (108) d'au moins un histogramme (15) pour l'élément de réception et l'inscription de la première quantité et/ou de la deuxième quantité de temps de transit dans l'histogramme.

2. Procédé selon la revendication 1,
**caractérisé en ce que**
le premier intervalle de mesure (10) et/ou le deuxième intervalle de mesure (11) présente une longueur,
la longueur étant adaptée à la longueur simple ou double de la plage de mesure.

3. Procédé (100) selon l'une quelconque des revendications précédentes, **caractérisé en ce que**
l'histogramme (15) présente la longueur de l'intervalle de mesure.

4. Procédé (100) selon l'une des revendications 2 ou 3,
**caractérisé en ce que**
seuls des temps de transit supérieurs à zéro et inférieurs à la longueur de l'intervalle de mesure sont inscrits dans l'histogramme.

5. Procédé (100) selon l'une quelconque des revendications précédentes, **caractérisé en ce que**
un nombre égal d'impulsions de mesure (13) est émis dans le premier intervalle de mesure (10) et dans le deuxième intervalle de mesure (11).

6. Procédé (100) selon l'une quelconque des revendications précédentes, **caractérisé en ce que**
des impulsions de mesure voisines (13) de la pluralité d'impulsions de mesure (13) émises à l'intérieur du premier intervalle de mesure (10) et/ou des impulsions de mesure voisines (13) de la pluralité d'impulsions de mesure émises à l'intérieur du deuxième intervalle de mesure (11) présentent un écart aléatoire entre elles.

7. Procédé (100) selon l'une quelconque des revendications précédentes, **caractérisé en ce que**
la pluralité d'impulsions de mesure (13) émises à l'intérieur du premier intervalle de mesure (10) et/ou la pluralité d'impulsions de mesure (13) émises à l'intérieur du deuxième intervalle de mesure (11) sont codées.

8. Procédé (100) selon l'une quelconque des revendications précédentes, **caractérisé en ce que**
au moins deux des impulsions de mesure émises à l'intérieur du premier intervalle de mesure (10) ou du deuxième intervalle de mesure (11) se distinguent par leur forme d'impulsion.

9. Procédé (100) selon l'une des revendications 1 ou 3 à 8,
**caractérisé en ce que**
la plage de mesure est divisée en au moins une section courte, une section moyenne et une section loin,
dans lequel des impulsions de mesure réfléchies provenant de la section courte, de la section moyenne et de la section loin sont reçues dans différentes zones d'une zone d'imagerie de l'élément de réception,
dans lequel un intervalle court de l'intervalle de mesure et une zone courte de l'élément de réception sont affectés à la section courte, un intervalle moyen de l'intervalle de mesure et une zone moyenne de l'élément de réception sont affectés à la section moyenne, et un intervalle loin de l'intervalle de mesure et une zone loin de l'élément de réception sont affectés à la section loin.

10. Procédé (100) selon la revendication 9,
**caractérisé en ce que**
la plage courte, la plage moyenne et la plage loin de l'élément de réception sont commandées sur la base de l'intervalle court, de l'intervalle moyen et de l'intervalle loin du premier intervalle de mesure.

11. Dispositif de mesure optique de distance,
dans lequel le dispositif présente une unité d'émission comprenant plusieurs éléments d'émission pour émettre des impulsions de mesure et une unité de réception comprenant plusieurs éléments de réception pour recevoir des impulsions de mesure réfléchies,
**caractérisé en ce que**
le dispositif est conçu pour mettre en oeuvre un procédé (100) selon l'une des revendications 1 à 10.

12. Produit programme d'ordinateur comprenant un support de stockage lisible par ordinateur sur lequel est stocké un programme qui, après avoir été chargé dans la mémoire de l'ordinateur, permet à un ordinateur d'exécuter un procédé (100) selon l'une quelconque des revendications 1 à 10 en coopération avec un dispositif selon la revendication 11.

13. Support de stockage lisible par ordinateur sur lequel est stocké un programme qui, après avoir été chargé dans la mémoire de l'ordinateur, permet à un ordinateur d'exécuter un procédé selon l'une quelconque des revendications 1 à 10 en coopération avec un dispositif selon la revendication 11.
